# FASCICULE DE BREVET EUROPEEN

(11) **EP 1 517 799 B1**
(45) Date de publication et mention de la délivrance du brevet: **05.12.2012**
(21) Numéro de dépôt: 03759937.0
(22) Date de dépôt: 12.06.2003
(51) Int. Cl.: B60C 1/00, C08K 5/3445, C08K 5/47

(54) **SEL DE THIOURONIUM A TITRE D AGENT ANTI-REVERSION DANS UNE C OMPOSITION DE CAOUTCHOUC VULCANISABLE ET PNEUMATIQUE A BASE D'UNE TELLE COMPOSITION**
THIOURONIUMSALZ ALS REVERSIONSVERHINDERNDES MITTEL IN EINER VULKANISIERBAREN KAUTSCHUKZUSAMMENSETZUNG UND AUF SOLCH EINER ZUSAMMENSETZUNG BASIERENDER REIFEN
THIOURONIUM SALT AS ANTI-REVERSION AGENT IN A VULCANISABLE RUBBER COMPOSITION AND TYRE BASED ON SUCH A COMPOSITION

(30) Priorité: 12.06.2002 FR 0207233
(43) Date de publication de la demande: 30.03.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: BLANCHARD, Christiane, 63119 Chateaugay (FR); PAGANO, Salvatore c/o Michelin Okamoto Tire Corp., Gunma-ken 0373-0828 (JP)
(74) Mandataire: Cohen, Sylvia
(86) Numéro de dépôt international: PCT/EP2003/006160
(87) Numéro de publication internationale: WO 2003/106195

(56) Documents cités:
- EP-A- 0 823 453
- FR-A- 1 538 328
- US-A- 3 979 369

## Description

L'invention concerne des compositions élastomériques vulcanisables et notamment des compositions de caoutchouc diénique vulcanisable destinées à la réalisation de pneumatique. Plus particulièrement, l'invention porte sur de nouveaux agents anti-réversion susceptibles d'être utilisés dans de telles compositions.

La vulcanisation d'élastomères insaturés, en présence de soufre ou de donneurs de soufre, se traduit par un passage à l'état élastique du mélange d'élastomères qui s'accompagne de modifications des propriétés mécaniques du mélange. Cette vulcanisation opère pendant la cuisson du mélange par l'établissement d'un réseau de ponts de soufre entre les différentes molécules polymériques.

Le réseau ainsi établi souffre néanmoins d'une instabilité thermique. L'échauffement des pneumatiques lors du roulage engendre des sollicitations thermiques des mélanges élastomériques cuits qui le composent. Ces sollicitations thermiques font l'effet d'une surcuisson qui, lorsque la température du mélange atteint une valeur voisine de la température de vulcanisation, occasionne un phénomène de réversion. La réversion est une rupture du réseau élastomérique par destruction ou raccourcissement des ponts de réticulation polysulfurées. Cette rupture du réseau entraîne une chute de module et modifie défavorablement les propriétés mécaniques du mélange élastomérique.

Aussi a-t-on tenté de limiter, voire de supprimer ce phénomène de réversion en utilisant dans des compositions de caoutchouc des additifs spécifiques, appelés agents anti-réversion, permettant de stabiliser thermiquement les vulcanisats.

Une famille largement décrite d'agents anti-réversion est constituée par les bismaléimides. Utilisés seuls, ces composés sont notamment illustrés dans le document JP91/056544. Les associations de bismaléimides et d'autres composés tels que d'autres agents anti-réversion ou des accélérateurs de vulcanisation, font l'objet notamment des documents EP 0 191 931, US 5,328,636, US 5,616,279, US 5,736,611 ou encore EP 0 823 453.

Les bis-citraconimides ont également été décrits dans des applications d'agents anti-réversion, seuls ou en combinaison avec d'autres additifs, notamment dans les documents WO 92/07904, US 5,623,007, US 5,872,188. L'acide bis-citraconique et ses dérivés sont également cités à titre d'agent améliorant la résistance à la réversion notamment dans le document US 5,696,188.

Une autre classe d'agents anti-réversion est constituée par les bis-succinimides et leurs dérivés, décrits notamment dans les documents US 5,844,049 et WO 96/20246.

Le document JP 94/256573 décrit l'utilisation de sels de dithiocarbamate pour améliorer la résistance à la réversion. Le document EP 0 832 920 divulgue quant à lui l'utilisation de dithiophosphate de zinc pour améliorer la stabilisation thermique des vulcanisats. Dans le document US 4,417,012 sont décrits des composés poly-thiosulfate ou poly-thiosulphonate permettant également de stabiliser les vulcanisats par rapport au phénomène de réversion. Plus récemment, le document US 5,736,611 enseigne l'amélioration de la résistance à la reversion de composition de caoutchouc comprenant des polyacrylates.

Les agents anti-réversion constituent un pôle de recherche important, particulièrement dans le domaine du pneumatique pour lequel une stabilité thermique optimale est primordiale. Le pneumatique ne peut en effet endurer de modifications substantielles de ses propriétés mécaniques sans que cela n'affecte ses performances.

On est donc toujours à la recherche de nouveaux agents anti-réversion utilisables notamment dans le domaine du pneumatique, qui permettent une stabilisation thermique suffisante et satisfaisante des vulcanisats. Aussi la présente invention vise-t-elle à proposer de nouveaux agents anti-réversion utilisables dans des compositions élastomériques plus particulièrement adaptées à la réalisation de pneumatique.

Les inventeurs ont maintenant mis en évidence que de manière surprenante certains sels de thiouronium ou d'analogues de ces sels présentent une remarquable aptitude anti-réversive et confèrent aux compositions élastomériques les contenant une stabilité thermique avantageuse notamment pour une utilisation dans la réalisation de pneumatiques. En outre ces sels ne nécessitent la présence d'aucun coagent pour réduire de manière significative le niveau de réversion des vulcanisats.

En conséquence, un premier objet de l'invention concerne une composition de caoutchouc vulcanisable pour la fabrication de pneumatiques ou de produits semi-finis destinés à la fabrication de pneumatiques comportant au moins (i) un élastomère diénique, (ii) une charge renforçante et (iii) un sel de thiouronium ou un analogue de ce sel de formule (I) :

(I) A-S-Y-S-A

dans laquelle,
- A représente un groupement 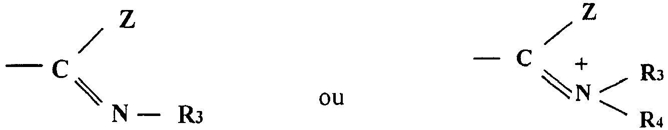 associé respectivement à une molécule HX ou un ion X⁻,
- X désignant un atome d'halogène et
- Z désignant S-R₅ ou 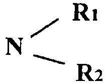 dans lesquels les radicaux R1, R2, R3, R4 et R5, identiques ou différents, désignent un atome d'hydrogène ou un groupe hydrocarboné monovalent, linéaire ou ramifié, choisi parmi les groupements alkyle en C1-C6, alkényle en C2-C8, cycloalkyle en C5-C8, aryle, aralkyle, le radical alkyle étant en C1-C6,
   ou alors R2 et R3 ou R5 et R3 forment avec les atomes d'azote auxquels ils sont liés un hétérocycle insaturé ayant de 3 à 5 atomes de carbone, substitués ou non par un ou plusieurs radicaux alkyle en C1-C6, ledit hétérocycle étant conjugué ou non à un noyau benzénique, et R1 et R4 désignent hydrogène, alkyle en C1-C6, alkényle en C2-C8;
- Y représente un groupe hydrocarboné divalent choisi parmi un radical alkylène ayant 1 à 20 atomes de carbone, un radical cycloalkylène ayant 6 à 24 atomes de carbone, un radical arylène ayant 6 à 18 atomes de carbone, un radical aralkylène ayant 7 à 25 atomes de carbone, les radicaux alkylène étant linéaires ou ramifiés et pouvant être interrompu par un ou plusieurs hétéroatomes choisis parmi O et N.

On entend par sel de thiouronium, le produit de la réaction d'une thiourée substituée ou non sur un halogénure hydrocarboné.

On entend par analogue d'un sel de thiouronium selon la présente invention, un composé de formule (I) dans laquelle
- Z désigne **S-R₅**
   avec R3, R4 et R5 tels que définis plus haut,
   ou encore,
- Z désigne 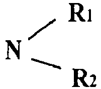 avec R2 et R3 formant avec les atomes d'azote auxquels ils sont liés un hétérocycle insaturé ayant de 3 à 5 atomes de carbone et substitué ou non par un ou plusieurs radicaux alkyle en C1-C6, ledit hétérocycle étant conjugué ou non à un noyau benzénique, et R1 et R4 désignent hydrogène, alkyle en C1-C6, alkényle en C2-C8,
Y étant tel que défini plus haut.

Les sels de thiouronium sont largement décrits dans la littérature. Dans le domaine de la chimie organique, ce sont en particulier des intermédiaires réactionnels dans la synthèse des mercaptans (G.G. Urquart, J.W. Gates, R. Connor, Org. Synth., Collect. vol.3, p.363, 1954 ou Fieser&Fieser, Reagents for organic synthesis, vol 1, 1164).

On recense également dans la littérature, l'utilisation de sels de thiouronium dans des applications très diverses telles que des applications textiles (S.M. Burkinshaw, X.P. Lei, JSDC, vol 106, 307, 1990) par exemple pour augmenter la "colorabilité" du coton, des applications industrielles (FR 2.331.555, ANIC S.P.A.) comme piège de métaux lourds ou encore agissant sur la corrosion de l'acier en milieu acide (J.Electrochem. Soc. India (1995), 44 (2), 121-8), des applications photographiques notamment comme agent nucléant (US 5,439,776, Sun Chemical Corp.) ou encore des applications thérapeutiques (FR 1.538.328, The Wellcome Foundation), notamment comme agents antimicrobiens (Farmaco (1989), 44 (12), 1129-40) ou de protection contre certaines radiations (J.Nucl. Med (1995), 36(2), 259-66; Res. Commun. Chem. Pathol. Pharmacol. (1985), 49(1), 47-56), ainsi que diverses autres applications du fait notamment de l'activité biologique de certains sels de thiouronium.

La stabilisation thermique de compositions de caoutchouc sans autre moyen que l'adjonction de ces sels de thiouronium ou de leurs analogues, ainsi que leur aptitude à réduire de manière significative la réversion sont surprenantes et inattendues au vu de l'état de la technique.

En conséquence, l'invention a également pour objet l'utilisation, à titre d'agent anti-réversion dans une composition de caoutchouc vulcanisable pour la fabrication de pneumatiques ou des produit semi-finis destiné à la fabrication de pneumatiques, d'un sel de thiouronium ou d'un analogue de ce sel, tel que défini ci-dessus.

Un autre objet de l'invention concerne l'utilisation d'une composition de caoutchouc conforme à l'invention pour la fabrication d'articles de caoutchouc stabilisés thermiquement, en particulier de pneumatiques ou de produits semi-finis en caoutchouc destinés à ces pneumatiques, ces produits semi-finis étant choisis en particulier dans le groupe constitué par les bandes de roulement, les sous-couches destinées par exemple à être placées sous ces bandes de roulement, les nappes d'armature de sommet, les flancs, les nappes d'armature de carcasse, les talons, les protecteurs, les chambres à air et les gommes intérieures étanches pour pneu sans chambre.

L'invention a d'autre part pour objet ces pneumatiques et ces produits semi-finis eux-mêmes, lorsqu'ils comportent une composition élastomérique conforme à l'invention, ces pneumatiques étant destinés à équiper par exemple des véhicules de tourisme, véhicules 4x4 (à 4 roues motrices), SUV ("Sport Utility Vehicles"), deux roues (notamment vélos ou motos), comme des véhicules industriels choisis parmi camionnettes, "Poids-lourd" - i.e., métro, bus, engins de transport routier (camions, tracteurs, remorques), véhicules hors-la-route-, engins agricoles ou de génie civil, avions, autres véhicules de transport ou de manutention.

L'invention concerne également un procédé de préparation d'une composition de caoutchouc vulcanisable pour la fabrication de pneumatiques ou des produit semi-finis destiné à la fabrication de pneumatiques, comportant les étapes suivantes :
a) on incorpore à un élastomère, dans un mélangeur, au moins une charge renforçante ;
b) on malaxe thermomécaniquement le tout, en une ou plusieurs fois, jusqu'à atteindre une température maximale comprise entre 110°C et 190°C;
c) on refroidit l'ensemble ;
d) on incorpore ensuite un système de vulcanisation comprenant du soufre;
e) on malaxe le tout jusqu'à une température maximale inférieure à 120°C,
et caractérisé en ce qu'on incorpore dans l'une au moins des étapes a) et d) au moins un sel de thiouronium ou un analogue d'un sel de thiouronium tel que défini plus haut.

L'invention a également pour objet un procédé pour réduire le taux de réversion d'une composition de caoutchouc vulcanisée pour la fabrication de pneumatiques ou de produits semi-finis destinés à la fabrication de pneumatiques, ce procédé se caractérisant par l'incorporation à cette composition à l'état cru d'au moins un sel de thiouronium tel que défini plus haut par malaxage thermomécanique.

L'invention ainsi que ses avantages seront aisément compris à la lumière de la description et des exemples de réalisation, nullement limitatifs, qui suivent.

L'invention sera plus particulièrement décrite en rapport avec une application aux pneumatiques. Toutefois, l'invention ne saurait se limiter à une telle application. En effet, les compositions selon l'invention sont également appropriées pour la réalisation d'articles en caoutchouc autres que des articles semi-finis pour pneumatiques, également soumis à des sollicitations thermiques et qui nécessitent une stabilité thermique améliorée pour prévenir la dégradation de leurs propriétés mécaniques.

### I Réalisation de l'invention

Les compositions de caoutchouc selon l'invention sont à base d'au moins chacun des constituants suivants : (i) au moins un élastomère diénique, (ii) au moins une charge renforçante et (iii) au moins un sel de thiouronium spécifique en tant qu'agent anti-réversion.

Lorsque la charge renforçante est constituée de tout ou partie d'une charge inorganique ou blanche, on lui associe, dans les compositions de caoutchouc selon l'invention, un agent de couplage.

Bien entendu, par l'expression composition "à base de", il faut entendre une composition comportant les différents constituants et/ou la composition issue de la réaction *in situ* de ces différents constituants, certains de ces constituants étant susceptibles de, ou destinés à réagir entre eux, au moins en partie, lors des différentes phases de fabrication de la composition, notamment au cours de sa vulcanisation.

### I.1 Elastomère :

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus et plus particulièrement avec des élastomères isopréniques notamment avec du caoutchouc naturel (NR).

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon norme ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention peut être choisi dans le groupe des élastomères diéniques fortement insaturés constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Dans le cas d'un pneumatique pour véhicule tourisme, l'élastomère diénique est par exemple un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence préparé en solution (SSBR), est éventuellement utilisé en mélange avec un polybutadiène (BR) possédant de préférence plus de 90% de liaisons cis-1,4.

Dans le cas d'un pneumatique pour véhicule utilitaire, notamment pour véhicule Poids-Lourd, l'élastomère diénique est notamment un élastomère isoprénique; par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule utilitaire, l'élastomère diénique peut être aussi constitué, en tout ou partie, d'un autre élastomère fortement insaturé tel que, par exemple, un élastomère SBR.

Selon un autre mode de réalisation de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Selon encore un autre mode de réalisation de l'invention, notamment lorsqu'elle est destinée à une gomme intérieure de pneumatique ou tout autre élément imperméable à l'air, la composition conforme à l'invention peut contenir au moins un élastomère diénique essentiellement saturé de type copolymère d'isobutène et d'isoprène (caoutchouc butyle), ainsi que les versions halogénées de ces copolymères.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques. Plus particulièrement, les compositions selon l'invention contiennent à titre d'élastomère diénique au moins un élastomère isoprénique, notamment du caoutchouc naturel, seul ou en mélange, à titre majoritaire ou non, avec au moins un autre élastomère diénique.

### I.2 Charge renforçante

La charge renforçante utilisée dans le cadre de la présente invention peut être constituée d'une charge inorganique ou blanche ou d'une charge organique, par exemple du noir de carbone, ou d'un mélange de ces deux types de charges.

De préférence, dans les compositions de caoutchouc conformes à l'invention, la charge inorganique renforçante constitue la majorité, i.e. plus de 50 % en poids de la charge renforçante totale, plus préférentiellement plus de 80 % en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type silice (SiO₂) ou alumine (Al₂O₃), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée est préférentiellement une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines A125, CR125, D65CR de la société Baïkowski.

L'état physique sous lequel se présente la charge inorganique renforçante est indifférent, que ce soit sous forme de poudre, de microperles, de granulés, ou encore de billes. Bien entendu, on entend également par charge inorganique renforçante des mélanges de différentes charges inorganiques renforçantes, en particulier de silices et/ou d'alumines hautement dispersibles telles que décrites ci-dessus.

Lorsque les compositions de caoutchouc de l'invention sont utilisées comme bandes de roulement de pneumatiques, la charge inorganique renforçante utilisée, en particulier s'il s'agit de silice, a de préférence une surface BET comprise entre 60 et 250 m²/g, plus préférentiellement comprise entre 80 et 200 m²/g.

La charge inorganique renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375.

La quantité de noir de carbone présente dans la charge renforçante totale peut varier dans de larges limites, cette quantité de noir de carbone étant préférentiellement inférieure à la quantité de charge inorganique renforçante présente dans la composition de caoutchouc.

Dans les compositions conformes à l'invention, en particulier dans les bandes de roulement incorporant de telles compositions, on préfère utiliser, en faible proportion, un noir de carbone en association avec la charge inorganique renforçante, à un taux préférentiel compris entre 2 et 20 pce, plus préférentiellement compris dans un domaine de 5 à 15 pce. Dans les fourchettes indiquées, on bénéficie des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée sur sol mouillé, enneigé ou verglacé.

De manière préférentielle, le taux de charge renforçante totale (charge inorganique renforçante plus noir de carbone le cas échéant) est compris entre 10 et 200 pce, plus préférentiellement entre 20 et 150 pce, l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de tels pneumatiques aptes à rouler à grande vitesse, la quantité de charge inorganique renforçante, en particulier s'il s'agit de silice, est de préférence comprise entre 30 et 140 pce, plus préférentiellement comprise dans un domaine de 50 à 120 pce.

Enfin, l'homme du métier comprendra qu'à titre de charge équivalente de la charge inorganique renforçante décrite dans le présent paragraphe, pourrait être utilisée une charge organique renforçante, notamment un noir de carbone, recouvert au moins en partie d'une couche inorganique, par exemple de silice, nécessitant quant à elle l'utilisation d'un agent de couplage pour établir la liaison avec l'élastomère.

### I.3 Agent de couplage

Lorsque la charge renforçante est constituée en tout ou partie d'une charge inorganique ou blanche, la composition de caoutchouc comprend également un agent de couplage.

On rappelle ici que par "agent de couplage" (charge inorganique/élastomère) on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y'-T-X"', dans laquelle:
- Y' représente un groupe fonctionnel (fonction "Y"') qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X' représente un groupe fonctionnel (fonction "X"') capable de se lier physiquement et/ou chimiquement à l'élastomère diénique, par exemple par l'intermédiaire d'un atome de soufre;
- T représente un groupe organique divalent permettant de relier Y' et X'.

On rappelle que les agents de couplage ne doivent pas être confondus avec de simples agents de recouvrement de la charge inorganique qui, de manière connue, peuvent comporter la fonction "Y"' active vis-à-vis de la charge inorganique mais sont dépourvus de la fonction "X"' active vis-à-vis de l'élastomère diénique.

Des agents de couplage (silice/élastomère diénique), d'efficacité variable, ont été décrits dans un très grand nombre de documents et sont bien connus de l'homme du métier. On peut utiliser tout agent de couplage connu susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X' et Y' ci-dessus.

On utilise notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357.

Conviennent en particulier pour la mise en oeuvre de l'invention, sans que la définition ci-après soit limitative, des silanes polysulfurés symétriques répondant à la formule générale (II) suivante:

(II) Z'-A'-Sx-A'-Z' ,

dans laquelle :
- x est un entier de 2 à 8 (de préférence de 2 à 5) ;
- A' est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
Z' répond à l'une des formules ci-après: 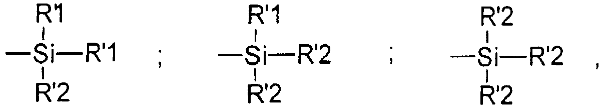 dans lesquelles:
- les radicaux R'1, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R'2, substitués ou non substitués, identiques ou différents entre eux, représentent un groupe hydroxyle, alkoxyle en C₁-C₁₈ ou cycloalkoxyle en C₅-C₁₈ (de préférence un groupe choisi parmi hydroxyle, alkoxyle en C₁-C₈ et cycloalkoxyle en C₅-C₈, plus préférentiellement encore un groupe choisi parmi hydroxyle et alkoxyle en C₁-C₄, en particulier méthoxyle et éthoxyle).

Dans le cas d'un mélange de silanes polysulfurés répondant à la formule (I) ci-dessus, notamment des mélanges usuels disponibles commercialement, on comprendra que la valeur moyenne des "x" est un nombre fractionnaire, de préférence compris dans un domaine de 2 à 5.

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-tri-éthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

L'homme du métier saura ajuster la teneur en agent de couplage dans les compositions de l'invention, en fonction de l'application visée, de la nature de l'élastomère utilisé et de la quantité et de la nature de charge inorganique employée à titre de charge renforçante.

L'agent de couplage utilisé pourrait être préalablement greffé (via la fonction "X"') sur l'élastomère diénique de la composition de l'invention, l'élastomère ainsi fonctionnalisé ou "précouplé" comportant alors la fonction "Y"' libre pour la charge inorganique renforçante. L'agent de couplage pourrait également être préalablement greffé (via la fonction "Y"') sur la charge inorganique renforçante, la charge ainsi "précouplée" pouvant ensuite être liée à l'élastomère diénique par l'intermédiaire des fonctions libres "X"'. On préfère toutefois utiliser l'agent de couplage à l'état libre (i.e., non greffé) ou greffé sur la charge inorganique renforçante, notamment pour des raisons de meilleure mise en oeuvre des compositions à l'état cru.

Enfin, à l'agent de couplage peut être éventuellement associé un "activateur de couplage" approprié, c'est-à-dire un corps (composé unique ou association de composés) qui, mélangé avec cet agent de couplage, augmente l'efficacité de ce dernier (voir par exemple demandes WO00/5300 et WO00/5301 précitées).

### I.4 Agent anti-réversion

Selon l'invention, la composition de caoutchouc vulcanisable comprend, à titre d'agent anti-réversion, au moins un sel de thiouronium ou un analogue de ce sel répondant à la formule (I) suivante :

(I) A-S-Y-S-A

dans laquelle,
- A représente un groupement 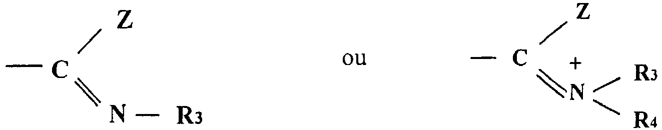 associé respectivement à une molécule HX ou un ion X⁻,
- X désignant un atome d'halogène et
- Z désignant **S-R₅** ou 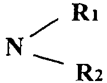 dans lesquels les radicaux R1, R2, R3, R4 et R5, identiques ou différents, désignent un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
   ou alors R2 et R3 ou R5 et R3 forment avec les atomes d'azote auxquels ils sont liés un hétérocycle insaturé ayant de 3 à 5 atomes de carbone, substitués ou non par un ou plusieurs radicaux alkyle en C1-C6, ledit hétérocycle étant conjugué ou non à un noyau benzénique, et R1 et R4 désignent hydrogène, alkyle en C1-C6, alkényle en C2-C8;
- Y représente un groupe hydrocarboné divalent choisi parmi un radical alkylène ayant 1 à 20 atomes de carbone, un radical cycloalkylène ayant 6 à 24 atomes de carbone, un radical arylène ayant 6 à 18 atomes de carbone, un radical aralkylène ayant 7 à 25 atomes de carbone, les radicaux alkylène étant linéaires ou ramifiés et pouvant être interrompus par un ou plusieurs hétéroatomes choisis parmi O et N.

Selon un aspect de l'invention, Y est un radical alkylène linéaire, plus particulièrement un radical alkylène ayant de 4 à 10 atomes de carbone et encore plus particulièrement 6 atomes de carbone.

Les inventeurs ont mis en évidence que parmi les composés répondant à la formule (I) ci-dessus, certains sels de thiouronium et analogues permettent de réduire encore davantage le taux de réversion de vulcanisats. II s'agit des composés de formule (I) dans laquelle
Z désigne 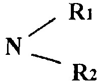 les substituants R1, R2, R3 et R4, identiques ou différents, désignent un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
ou alors R2 et R3 forment avec les atomes d'azote auxquels ils sont liés un hétérocycle insaturé ayant de 3 à 5 atomes de carbone, substitués ou non par un ou plusieurs radicaux alkyle en C1-C6, et R1 et R4 désignent hydrogène, alkyle en C1-C6, alkényle en C2-C8;
le groupement Y est tel que défini ci-dessus.

Les compositions de caoutchouc comprenant de tels composés constituent une mise en oeuvre préférentielle de l'invention.

Selon cette mise en oeuvre, on choisira plus particulièrement les sels de thiouronium parmi les composés de formule (I) dans laquelle R1, R2, R3 et R4, identiques ou différents, désignent un atome d'hydrogène ou un groupement choisi parmi les radicaux alkyle en C1-C6, alkényle en C2-C8.

Selon un autre aspect de cette mise en oeuvre, on choisira plus particulièrement les analogues de sels de thiouronium parmi les composés de formule (I) dans laquelle R2 et R3 forment avec les deux atomes d'azote auxquels ils sont liés, un hétérocycle insaturé de 3 à 5 atomes de carbone non conjugué à un noyau benzénique, R1 et R4 étant tels que définis plus haut.

Les sels de thiouronium et leurs analogues conformes à l'invention peuvent être obtenus par des procédés classiques simples. A titre d'exemple, on peut faire réagir au reflux une thiourée de formule :

R1R2 N - C (=S) -N R3R4 ,

les substituants R1, R2, R3 et R4, identiques ou différents, désignant un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
sur un composé de formule X - Y - X, X et Y étant tels que définis plus haut, dans un solvant prédéterminé pendant une durée prédéterminée. La réaction de substitution conduit à la formation d'un sel de thiouronium de formule (I) définie plus haut.

Les analogues de sels de thiouronium de formule (I) selon l'invention peuvent être obtenus de manière analogue.

On peut trouver des illustrations de synthèses de ces sels dans la littérature scientifique et notamment dans Org. Syntheses, Coll. Vol.3, 362, 1954, Fieser & Fieser, Reagents for organic synthesis, Vol 1, 1164, J. March, Advanced organic chemistry, reactions, mechanisms and structure, page 360, J. Heterocyclic Chem., 20, 813, 1983, ou encore dans la littérature brevet notamment FR 2 331 555, FR 1 538 328, US 4 214 096, US 3 631 194.

L'agent anti-réversion est présent dans la composition de caoutchouc vulcanisable selon l'invention dans des proportions allant de 0.1 à 10 pce, de préférence de 0.5 à 5,0 pce.

### I.5 Système de vulcanisation

Les compositions élastomériques conformes à l'invention comportent généralement un système de vulcanisation à base de soufre. Le système de vulcanisation proprement dit est préférentiellement à base de soufre et d'un accélérateur primaire de vulcanisation, en particulier un accélérateur du type sulfénamide. A ce système de réticulation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

### I.6 Additifs divers

Bien entendu, les compositions élastomériques conformes à l'invention peuvent également comporter tout ou partie des additifs usuels utilisés dans des compositions de caoutchouc destinées à la fabrication de pneumatique, comme par exemple des huiles d'extension, des plastifiants, des agents de protection tels que cires anti-ozone, anti-ozonants chimiques, anti-oxydants, agents anti-fatigue, des promoteurs d'adhésion, des activateurs de couplage, des résines renforçantes, des accepteurs et/ou donneurs de méthylène. A la silice peut être également associée, si besoin est, une charge blanche conventionnelle peu ou non renforçante, par exemple des particules d'argile, bentonite, talc, craie, kaolin, utilisables par exemple dans des bandes de roulement de pneumatique colorées.

Les compositions élastomériques peuvent également contenir, en complément des agents de couplage précédemment décrits, des agents de recouvrement pour charges inorganiques, comportant par exemple la seule fonction Y', ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur faculté de mise en oeuvre à l'état cru ; ces agents, utilisés à un taux préférentiel compris entre 0,5 et 3,0 pce, sont par exemple des alkylalkoxysilanes, notamment des alkyltriéthoxysilanes, comme le 1-octyl-triéthoxysilane commercialisé par la société Degussa-Hüls sous la dénomination Dynasylan Octeo ou le 1-hexa-décyl-triéthoxysilane commercialisé par la société Degussa-Hüls sous la dénomination Si216, des polyols, des polyéthers (par exemple des polyéthylène glycols), des amines primaires, secondaires ou tertiaires (par exemple des trialcanol-amines), des polyorganosiloxanes hydroxylés ou hydrolysables, par exemple des α,ω-dihydroxy-polyorganosiloxanes (notamment des α,ω-dihydroxy-polydiméthylsiloxanes).

### I.7 Préparation de la composition de caoutchouc

Les compositions sont fabriquées dans des mélangeurs appropriés, en utilisant deux phases de préparation successives bien connues de l'homme du métier : une première phase de travail ou malaxage thermomécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 60°C et 100°C, phase de finition au cours de laquelle est incorporé le système de vulcanisation ; de telles phases ont été décrites par exemple dans les demandes EP 501 227, EP 735 088, EP 810 258, EP 881 252, WO00/05300 ou WO00/05301.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et agent de couplage si nécessaire), puis dans un deuxième temps, par exemple après une à deux minutes de malaxage, les éventuels agents de recouvrement ou de mise en oeuvre complémentaires et autres additifs divers, à l'exception du système de vulcanisation. Lorsque la densité apparente de la charge inorganique renforçante est faible (cas général des silices), il peut être avantageux de fractionner son introduction en deux ou plusieurs parties.

Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, par exemple entre 30°C et 100°C, généralement dans un mélangeur externe tel qu'un mélangeur à cylindres ; le tout est alors mélangé (phase productive) pendant quelques minutes, par exemple entre 5 et 15 minutes.

Le procédé de fabrication selon l'invention est caractérisé en ce qu'au moins un sel de thiouronium ou un analogue de ce sel, défini plus haut, est introduit dans le mélange au cours de la première phase (phase non-productive) et/ou au cours de la seconde phase (phase productive). On préférera néanmoins ajouter le sel de thiouronium ou son analogue au cours de la seconde phase avec le système de vulcanisation. En effet, l'adjonction du composé de formule (I) lors de la phase productive permet d'améliorer encore davantage la résistance à la réversion.

La composition finale ainsi obtenue peut ensuite être calandrée, par exemple sous la forme d'une feuille, d'une plaque ou encore extrudée, par exemple pour former un profilé de caoutchouc utilisé pour la fabrication de semi-finis pour pneumatiques tels que des bandes de roulement, des nappes d'armatures de sommet, des flancs, des nappes d'armatures de carcasse, des talons, des protecteurs, des chambres à air ou des gommes intérieures étanches pour pneu sans chambre.

En résumé, le procédé conforme à l'invention pour préparer une composition de caoutchouc vulcanisable, utilisable notamment pour la fabrication de produits semi-finis pour pneumatiques, comporte les étapes suivantes :
a) on incorpore à un élastomère diénique, dans un mélangeur, au moins une charge renforçante ;
b) on malaxe thermomécaniquement le tout, en une ou plusieurs fois, jusqu'à atteindre une température maximale comprise entre 110°C et 190°C ;
c) on refroidit l'ensemble ;
d) on incorpore ensuite un système de vulcanisation ;
e) on malaxe le tout jusqu'à une température maximale inférieure à 120°C,
et est caractérisé en ce qu'au moins un sel de thiouronium ou un analogue répondant à la formule (I) précitée est introduit dans la composition dans l'une au moins des étapes a) et d).

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation). Les compositions conformes à l'invention peuvent être utilisées seules ou en coupage (i.e., en mélange) avec toute autre composition de caoutchouc, par exemple, pour une application pneumatique, avec une autre composition utilisable pour la fabrication de pneumatique.

### II Exemples de réalisation

### II.1 Préparation de différents sels selon l'invention

Toutes les manipulations sont réalisées en milieu aérobie.

### Synthèse du 1,6-bis(hydrobromure d'isothiouronium)hexane

Dans un tricol de 100ml équipé d'un réfrigérant à boules et d'un barreau aimanté, on introduit successivement 1.52g (0.02mol) de thiourée et 1.6 ml (0.01mol) de 1,6-dibromohexane et, à titre de solvant, 25 ml d'éthanol avant de porter le milieu réactionnel au reflux. On obtient un milieu réactionnel limpide, jaune pâle après solubilisation de la thiourée
Après deux heures de reflux, il apparaît un solide blanc qui prend en masse dans le ballon. Le suivi analytique de la réaction (CLHP pour la thiourée et CPG pour le 1,6-dibromohexane) montre la disparition totale des réactifs au bout d'environ 24 heures.
On filtre le milieu réactionnel à chaud sur fritté : on lave le solide à l'aide d'éthanol avant de la placer à l'étuve à vide pour le sécher. On obtient du 1,6-bis(hydrobromure d'isothiouronium)hexane, composé **1.**

### Synthèse de 1,6-bis(hydrobromure de thiouronium N-substitué)hexane et analogues

Les deux tableaux suivants rassemblent les conditions opératoires mises en oeuvre pour chacun des sels de thiouronium et analogues suivants selon un procédé de préparation analogue à celui de la synthèse du le 1,6-bis(hydrobromure d'isothiouronium)hexane.
**2.** le 1,6-bis(hydrobromure de N-méthyl thiouronium)hexane,
**3.** le 1,6-bis(hydrobromure de N-phényl thiouronium)hexane,
**4.** le 1,6-bis(hydrobromure de N-allyl thiouronium)hexane,
**5.** le 1,6-bis(hydrobromure de N,N'-diméthyl isothiouronium)hexane,
**6.** le 1,6-bis(hydrobromure de N,N'-diphényl isothiouronium)hexane,
**7.** le 1,6-bis(hydrobromure de N,N'-diéthyl isothiouronium)hexane,
**8.** le 1,6-bis(hydrobromure de N,N'-di-n-butyl isothiouronium)hexane,
**9.** le 1,6-bis(bromure de N,N'-tétraméthyl isothiouronium)hexane,
**10**. le dibromure de 2-{[6-(1,4,5,6-tétrahydropyrimidine-1-ium-2-ylthio)hexyl]thio}-1,4,5,6-tétrahydropyrimidine-1-ium,
**11**. le dihydrobromure de 2-{[6-(1H-benzimidazol-2-ylthio)hexyl]thio}-1H-benzimidazole,
**12**. le dihydrobromure de 2-{[6-(1,3-benzothiazol-2-ylthio)hexyl]thio}-1,3-benzothiazole.

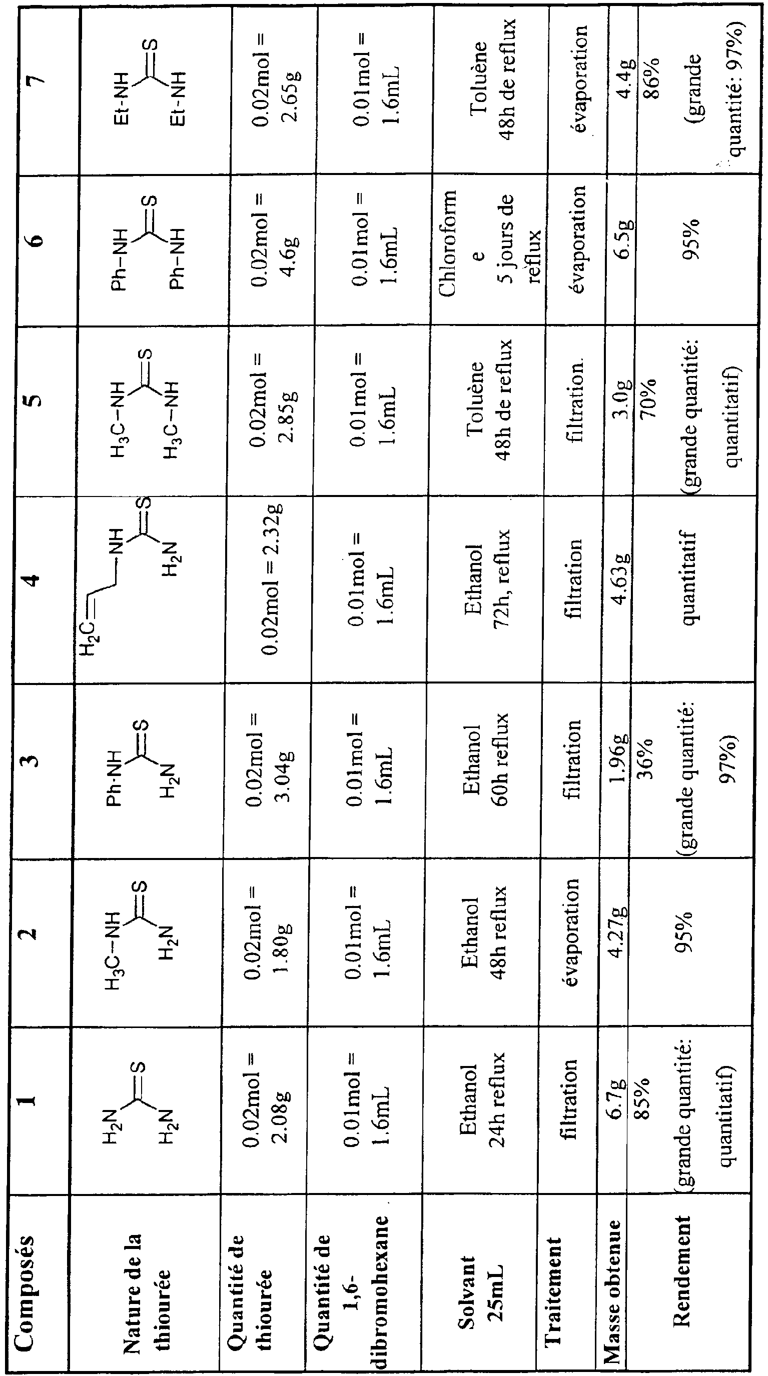

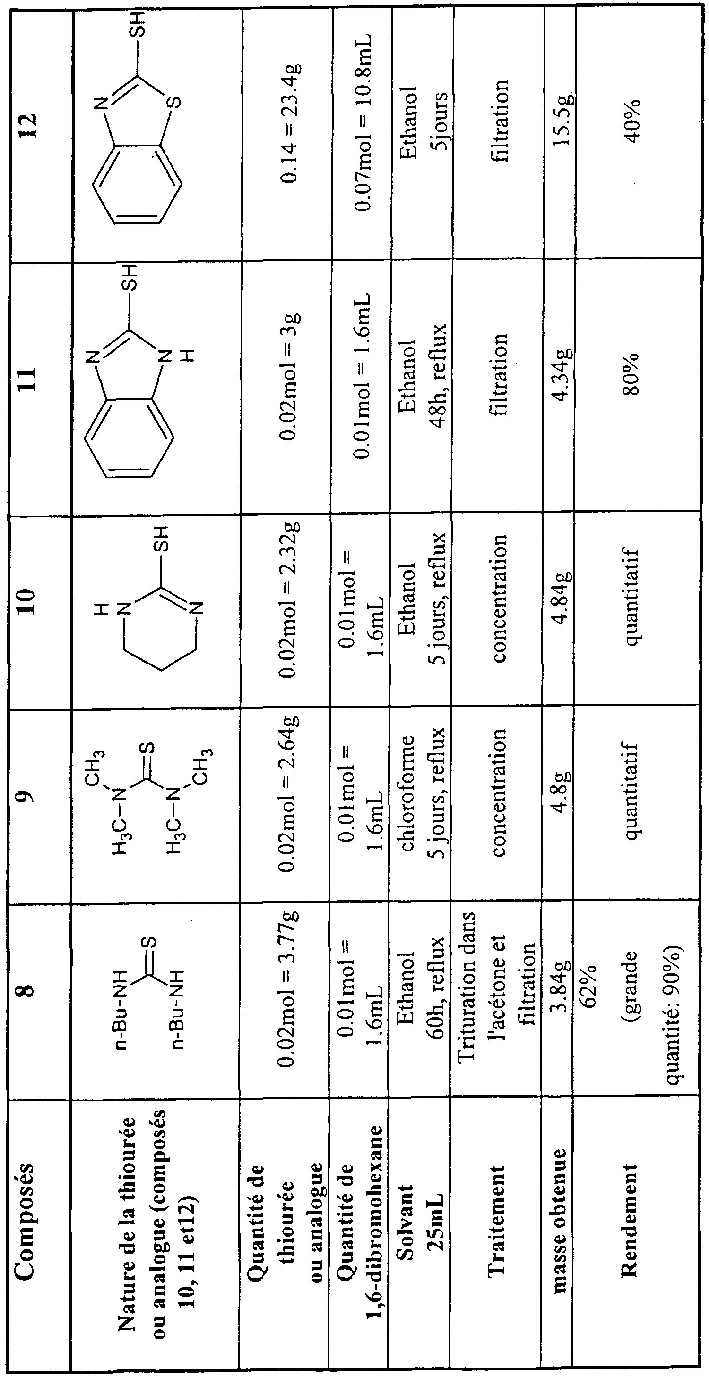

On a ensuite préparé des compositions contenant comme agent anti-réversion un sel de thiouronium ou un analogue illustré précédemment, puis on a testé ces compositions.

### II.2 Préparation des compositions

On procède pour la préparation des compositions de la manière suivante : on introduit dans un mélangeur interne de 400 cm³ à palettes usuelles du type "Banburry", rempli à 70% et dont la température initiale de cuve est d'environ 60°C, l'élastomère diénique (ou le mélange d'élastomères diéniques, le cas échéant), une charge renforçante, l'agent de couplage le cas échéant, puis, après une à deux minutes de malaxage, les divers autres ingrédients à l'exception du système de vulcanisation et de l'agent anti-réversion. On conduit alors un travail thermomécanique (phase non-productive) en une étape (durée totale du malaxage égale à environ 7 min), jusqu'à atteindre une température maximale de "tombée" d'environ 150-170°C.

On récupère le mélange ainsi obtenu, on le refroidit puis on ajoute le système de vulcanisation et l'agent anti-réversion selon l'invention, sur un mélangeur externe (homofinisseur) à 30°C, en mélangeant le tout (phase productive) pendant 3 à 4 minutes sur l'outil à cylindres.

Les compositions sont ensuite calandrées puis vulcanisée.

### II.3 Mesures et tests utilisés

Les compositions de caoutchouc sont caractérisées avant et après cuisson, comme suit.

### a Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours / minute et on mesure le couple utile pour entretenir ce mouvement après 4 minutes de rotation. La plasticité Mooney (ML1+4) est exprimée en "unité Mooney" (UM, avec 1 UM = 0,83 Newton.mètre).

### b Essais de traction

Ces essais de traction permettent de déterminer les contraintes d'élasticité et les propriétés à la rupture. Ils sont effectués conformément à la norme AFNOR-NFT-46002 de septembre 1988. On mesure en seconde élongation (i.e. après un cycle d'accommodation) les modules sécants nominaux (en MPa), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

### c Mesure de la réversion

Afin de simuler des sollicitations thermiques auxquelles sont soumises des compositions de caoutchouc vulcanisées lors du roulage du pneumatique les contenant, on a augmenté le temps de cuisson à l'optimum de ces compositions à une température donnée de manière à les placer dans des conditions de surcuisson.

La mesure de la réversion a pour but d'accéder de manière indirecte à l'évolution du nombre de ponts sulfurés obtenu après une cuisson à l'optimum vers celui obtenu pour un temps donné situé au-delà du temps de cuisson à l'optimum (surcuisson ou cuisson prolongée).

Une manière de déterminer la réversion est de mesurer l'évolution du module à 100% de déformation ou 300% de déformation après un temps très long de cuisson au-delà de l'optimum. On peut par exemple utiliser le paramètre %ΔM100 qui correspond à l'évolution du module sécant nominal à 100% d'allongement entre la mesure à l'optimum de cuisson (à 150°C ou 180°C) et après une cuisson prolongée (4h à 150°C ou 6h à 180°C) et qui représente le taux de réversion après 4 ou 6 heures de cuisson prolongée à respectivement 150°C ou 180°C. On peut également utiliser le paramètre %ΔM300 qui correspond à l'évolution du module sécant nominal à 300% d'allongement entre la mesure à l'optimum de cuisson (à 150°C ou 180°C) et après une cuisson prolongée de 4 heures à 150°C ou 6h à 180°C, et qui représente le taux de réversion après 4 ou 6 heures de cuisson prolongée à respectivement 150°C ou 180°C.

Plus les %ΔM100 ou %ΔM300 sont élevés, plus le phénomène de réversion est important.

### II.4 Résultats des essais

On compare ci-après les compositions (C) formulées dans les **Tableaux 1a** à **1c** qui selon l'invention comprennent au moins un sel de thiouronium ou un analogue à titre d'agent anti-réversion selon l'invention, à des compositions témoins (T) exemptes d'agent anti-réversion.

### a Première série

On a testé une composition C1 selon l'invention contenant à titre d'agent anti-réversion le sel de thiouronium obtenu à partir de la thiourée, soit le Composé 1.

Les compositions testées répondent à la formulation du **Tableau 1a,** les taux des différents produits étant exprimés en pce, soit parties en poids pour 100 parties en poids d'élastomère.

Le **Tableau 2a** donne les propriétés avant et après cuisson à l'optimum à 150°C, ainsi qu'après cuisson prolongée de 4 heures à 150°C. La stabilité thermique des mélanges est mesurée par l'évolution du module sécant nominal à 100% et à 300% d'allongement entre la mesure à l'optimum de cuisson (à 150°C) et après une cuisson prolongée de 4h (à 150°C).

Il ressort de ces essais, que la viscosité Mooney de la composition C1 selon l'invention reste sensiblement inchangée par rapport à la composition témoin T1.

L'étude des résultats du **Tableau 2a** montre également que la composition conforme à l'invention, C1, comparée à la composition T1, permet d'obtenir des vulcanisats avec des propriétés à l'optimum de cuisson à 150°C proches du témoin. L'évolution des modules sécants nominaux à 100% et 300% d'allongement entre l'optimum de cuisson (à 150°C) et une cuisson prolongée (4h à 150°C) montre la très bonne stabilité thermique du mélange formulé avec le sel de thiouronium, supérieure au témoin pour lequel cette évolution de modules est importante.

Grâce à l'incorporation du sel de thiouronium dans un mélange de caoutchouc, en présence de soufre et d'un accélérateur de vulcanisation, on peut donc obtenir des vulcanisats présentant une stabilité thermique très bonne par rapport à un témoin formulé sans agent anti-réversion.

Le **Tableau 3a** donne les propriétés des compositions testées avant et après cuisson à l'optimum à 180°C, ainsi qu'après cuisson prolongée de 6 heures à 180°C. La stabilité thermique des mélanges est mesurée par l'évolution du module sécant nominal à 100% et à 300% d'allongement entre la mesure à l'optimum de cuisson (à 150°C) et après une cuisson prolongée de 6h (à 180°C).

On constate que la composition conforme à l'invention, C1, comparées à la composition T1, permet d'obtenir des vulcanisats avec des propriétés à l'optimum de cuisson et ce même à 180°C, proches du témoin. L'évolution des modules sécants nominaux à 100% et 300% d'allongement entre l'optimum de cuisson (à 180°C) et une cuisson prolongée (6h à 180°C) montre la très bonne stabilité thermique du mélange formulé avec le sel de thiouronium, supérieure au témoin pour lequel cette évolution de modules est importante.

Les résultats de ces essais montrent également clairement que l'on obtient une réduction significative de la réversion lorsqu'on emploie, conformément à l'invention, un sel de thiouronium comme agent anti-réversion, en l'occurrence le Composé 1, dans la composition de caoutchouc diénique vulcanisable.

### b Deuxième série

On a ensuite testé des compositions conformes à l'invention dont l'agent anti-réversion est obtenu à partir d'une thiourée bisubstituée ou tétrasubstituée, soit les composés 5, 7 et 9. Les compositions testées C5, C6, C7 et C9 répondent à 1a formulation du **Tableau 1b,** les taux des différents produits étant exprimés en pce.

L'étude des résultats du **Tableau 2b** montre que les compositions C5, C7 et C9 conformes à l'invention, comparées à la composition témoin T2, présentent à l'état cru une viscosité Mooney équivalente ou supérieure mais toujours satisfaisante.

L'évolution des modules sécants nominaux à 100% et 300% d'allongement entre l'optimum de cuisson (à 150°C) et une cuisson prolongée (4h à 150°C) montre la très bonne stabilité thermique des mélanges formulés avec un sel de thiouronium, supérieure au témoin pour lequel cette évolution de modules est importante.

Ces résultats montrent clairement que l'on obtient une réduction significative de la réversion lorsqu'on emploie, conformément à l'invention, un sel de thiouronium comme agent anti-réversion, en l'occurrence les Composés 5, 7 ou 9, dans des compositions de caoutchouc diénique vulcanisables.

### c troisième série

On a ensuite testé une composition conforme à l'invention dont l'agent anti-réversion est obtenu à partir d'un composé analogue à un sel de thiouronium, soit le composé 10. La composition testée C10 répond à la formulation du **Tableau 1c,** les taux des différents produits étant exprimés en pce.

L'étude des résultats du **Tableau 2c** montre que la composition C10 conforme à l'invention présente à l'état cru une viscosité Mooney sensiblement inchangée comparée à la composition témoin T3.

On constate également que la composition conforme à l'invention, C10, comparée à la composition T3, permet d'obtenir un vulcanisats avec des propriétés à l'optimum de cuisson à 150°C proches du témoin. L'évolution des modules sécants nominaux à 100% et 300% d'allongement entre l'optimum de cuisson (à 150°C) et une cuisson prolongée (4h à 150°C) montre la très bonne stabilité thermique du mélange formulé avec le composé 10, supérieure au témoin pour lequel cette évolution de modules est importante.

Ces résultats montrent également clairement que l'on obtient une réduction significative de la réversion lorsque l'on emploie, conformément à l'invention, un analogue de sel de thiouronium comme agent anti-réversion, en l'occurrence le Composé 10, dans des compositions de caoutchouc diénique vulcanisables.

Grâce à l'incorporation d'un sel de thiouronium ou d'un analogue d'un tel sel dans un mélange de caoutchouc, en présence de soufre, on peut donc obtenir des vulcanisats présentant une stabilité thermique améliorée par rapport à un témoin formulé sans agent anti-réversion en ce sens que la réversion est sensiblement diminuée.

**Tableau 1a**

| Composition: | T1 | C1 |
|---|---|---|
| NR (1) | 100 | 100 |
| Noir de Carbone (2) | 35 | 35 |
| ZnO (3) | 5 | 4 |
| Acide stéarique (4) | 2 | 2 |
| Antioxydant (5) | 2 | 2 |
| Soufre (6) | 1.6 | 1.6 |
| Composé 1 | - | 2 |
| CBS (7) | 0.6 | 0.6 |

| | | |
|---|---|---|
| (1) caoutchouc naturel peptisé (mélange de feuilles et de SAR10) ; (2) noir de carbone N375 de la société Cabot ou de la société Columbian; (3) oxyde de zinc ou ZnO Cachet Rouge de la société Umicore ; (4) stéarine (Pristerene 4931) de la société Uniqema ; (5) N-1,3-diméthylbutyl-N-phényl-para-phénylènediamine le Santoflex 13 de la société Flexsys ; (6) soufre d'origine minière de la société Siarkopol, pétrolière de la société Cabrero ou synthétique de la société Solvay ; (7) N-cyclohexyl-2-benzothiazol-sulfénamide ou le Santocure CBS de la société Flexsys. | | |

**Tableau 2a**

| Composition : | T1 | C1 |
|---|---|---|
| *Propriétés avant cuisson:* | | |
| Mooney (UM) | 61 | 64 |

| *Propriétés après cuisson à l'optimum à 150°C:* | | |
|---|---|---|
| M 100 (MPa) | 1.53 | 1.77 |
| M300 (MPa) | 1.99 | 2.13 |
| contrainte rupture (MPa) | 30.2 | 31.8 |
| allongement rupture (%) | 562 | 566 |
| | | |

| *Propriétés après cuisson prolongée de 4heures à 150°C:* | | |
|---|---|---|
| M100 (MPa) | 1.13 | 1.69 |
| M300 (MPa) | 1.36 | 2.07 |
| % ΔM100 (%) | 26 | 4 |
| % ΔM300 (%) | 31 | 3 |

**Tableau 3a**

| Composition : | T1 | C1 |
|---|---|---|
| *Propriétés après cuisson à l'optimum à 180°C:* | | |
| M 100 (MPa) | 1.18 | 1.54 |
| M300 (MPa) | 1.42 | 1.87 |
| contrainte rupture (MPa) | 25.4 | 26.2 |
| allongement rupture (%) | 601 | 555 |
| | | |

| *Propriétés après cuisson prolongée de 6heures à 180°C :* | | |
|---|---|---|
| M100 (MPa) | 0.85 | 1.34 |
| M300 (MPa) | 1 | 1.54 |
| % ΔM100 (%) | 29 | 12 |
| % ΔM300 (%) | 29 | 17 |

**Tableau 1b**

| Composition N° : | T2 | C5 | C7 | C9 |
|---|---|---|---|---|
| NR (1) | 100 | 100 | 100 | 100 |
| Noir de Carbone (2) | 35 | 35 | 35 | 35 |
| ZnO (3) | 5 | 5 | 5 | 4 |
| Acide stéarique (4) | 2 | 2 | 2 | 2 |
| Antioxydant (5) | 2 | 2 | 2 | 2 |
| Soufre (6) | 1.6 | 1.6 | 1.6 | 1.6 |
| Composé 5 (7) | - | 2.5 | - | - |
| Composé 7 (8) | - | - | 2.8 | - |
| Composé 9 (9) | - | - | - | 2.8 |
| CBS (10) | 0.6 | 0.6 | 0.6 | 0.6 |

| | | | | |
|---|---|---|---|---|
| (1) caoutchouc naturel peptisé (mélange de feuilles et de SAR10) ; (2) noir de carbone N375 de la société Cabot ou de la société Columbian; (3) oxyde de zinc ou ZnO Cachet Rouge de la société Umicore ; (4) stéarine (Pristerene 4931) de la société Uniqema ; (5) N-1,3-diméthylbutyl-N-phényl-para-phénylènediamine le Santoflex 13 de la société Flexsys ; (6) soufre d'origine minière de la société Siarkopol, pétrolière de la société Cabrero ou synthétique de la société Solvay ; (7) 1,6-bis(hydrobromure de N,N'-diméthyl isothiouronium)hexane (8) 1,6-bis(hydrobromure de N,N'-diéthyl isothiouronium)hexane (9) 1,6-bis(hydrobromure de N,N'-tétraméthyl isothiouronium)hexane (10) N-cyclohexyl-2-benzothiazol-sulfénamide ou le Santocure CBS de la société Flexsys. | | | | |

**Tableau 2b**

| Composition N° : | T2 | C5 | C7 | C9 |
|---|---|---|---|---|
| *Propriétés avant cuisson:* | | | | |
| Mooney (UM) | 61 | 71 | 70 | 66 |
| | | | | |

| *Propriétés après cuisson à l'optimum à 150°C:* | | | | |
|---|---|---|---|---|
| M100 (MPa) | 1.53 | 1.64 | 1.42 | 1.89 |
| M300 (MPa) | 1.99 | 1.95 | 1.71 | 2.39 |
| contrainte rupture (MPa) | 30.2 | 31.4 | 27 | 32.6 |
| allongement rupture (%) | 562 | 582 | 568 | 554 |
| | | | | |

| *Propriétés après cuisson prolongée de 4heures à 150°C* | | | | |
|---|---|---|---|---|
| M100 (MPa) | 1.13 | 1.49 | 1.32 | 1.76 |
| M300 (MPa) | 1.36 | 1.74 | 1.53 | 2.25 |
| % ΔM100 (%) | 26.1 | 9 | 7 | 7 |
| % ΔM300 (%) | 31.6 | 10 | 10 | 6 |

**Tableau 1c**

| Composition N° : | T3 | C10 |
|---|---|---|
| NR (1) | 100 | 100 |
| Noir de Carbone (2) | 35 | 35 |
| ZnO (3) | 5 | 5 |
| Acide stéarique (4) | 2 | 2 |
| Antioxydant (5) | 2 | 2 |
| Soufre (6) | 1.6 | 1.6 |
| Composé 10 (7) | - | 2.9 |
| CBS (8) | 0.6 | 0.6 |

| | | |
|---|---|---|
| (1) caoutchouc naturel peptisé (mélange de feuilles et de SAR10) ; (2) noir de carbone N375 de la société Cabot ou de la société Columbian ; (3) oxyde de zinc ou ZnO Cachet Rouge de la société Umicore ; (4) stéarine (Pristerene 4931) de la société Uniqema ; (5) N-1,3-diméthylbutyl-N-phényl-para-phénylènediamine le Santoflex 13 de la société Flexsys ; (6) soufre d'origine minière de la société Siarkopol, pétrolière de la société Cabrero ou synthétique de la société Solvay ; (7) le dibromure de 2-{[6-(1,4,5,6-tétrahydropyrimidine-1-ium-2-ylthio)hexyl]thio}-1,4,5,6-tétrahydropyrimidine-1-ium, (8) N-cyclohexyl-2-benzothiazol-sulfénamide ou le Santocure CBS de la société Flexsys | | |

**Tableau 2c**

| Composition N° : | T3 | C10 |
|---|---|---|
| *Propriétés avant cuisson:* | | |
| Mooney (UM) | 57 | 63 |

| *Propriétés après cuisson à l'optimum à 150°C:* | | |
|---|---|---|
| M100 (MPa) | 1.53 | 1.87 |
| M300 (MPa) | 2.03 | 2.33 |
| contrainte rupture (MPa) | 32 | 30 |
| allongement rupture (%) | 623 | 567 |

| *Propriétés après cuisson prolongée de 4heures à 150°C* | | |
|---|---|---|
| M100 (MPa) | 1.10 | 1.74 |
| M300 (MPa) | 1.32 | 2.18 |
| % ΔM100 (%) | 27.8 | 7 |
| % ΔM300 (%) | 35 | 7 |

## Revendications

1. Composition de caoutchou pour la fabrication de pneumatiques ou de produits semi-finis destinés à la fabrication de pneumatiques, à base d'au moins (i) un élastomère diénique, (ii) une charge renforçante et (iii) un sel de thiouronium ou un analogue d'un sel de thiouronium répondant à la formule (I) suivante :
A-S-Y-S-A (I)
dans laquelle,
- A représente un groupement 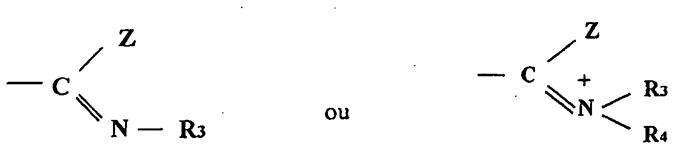 associé respectivement à une molécule HX ou un ion X⁻,
- X désignant un atome d'halogène et
- Z désignant S-R₅ ou 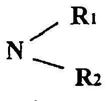 dans lesquels les radicaux R1, R2, R3, R4 et R5, identiques ou différents, désignent un atome d'hydrogène ou un groupe hydrocarboné monovalent, linéaire ou ramifié, choisi parmi les groupements alkyle en C1-C6, alkényle en C2-C8, cycloalkyle en C5-C8, aryle, aralkyle le radical alkyle étant en C1-C6,
ou alors R2 et R3 ou R5 et R3 forment avec les atomes d'azote auxquels ils sont liés un hétérocycle insaturé ayant de 3 à 5 atomes de carbone, substitués ou non par un ou plusieurs radicaux alkyle en C1-C6, ledit hétérocycle étant conjugué ou non à un noyau benzénique, et R1 et R4 désignent hydrogène, alkyle en C1-C6, alkényle en C2-C8;
- Y représente un groupe hydrocarboné divalent choisi parmi les radicaux alkylène ayant 1 à 20 atomes de carbone, cycloalkylène ayant 6 à 24 atomes de carbone, arylène ayant 6 à 18 atomes de carbone et aralkylène ayant 7 à 25 atomes de carbone, les radicaux alkylène étant linéaires ou ramifiés et pouvant être interrompus par un ou plusieurs hétéroatomes choisis parmi O et N.

2. Composition selon la revendication précédente, **caractérisée en ce que** le sel de thiouronium ou l'analogue d'un sel de thiouronium est choisi parmi les composés de formule (I) dans laquelle Y désigne un radical alkylène linéaire, de préférence en C4-C10.

3. Composition de caoutchouc selon la revendication 1 ou 2, **caractérisé en ce que** le sel de thiouronium ou l'analogue d'un sel de thiouronium est choisi parmi les composés de formule (I) dans laquelle,
Z représente le groupement 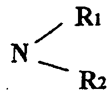 les substituants R1, R2, R3 et R4, identiques ou différents, désignent un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
ou alors R2 et R3 forment avec les atomes d'azote auxquels ils sont liés un hétérocycle insaturé ayant de 3 à 5 atomes de carbone, substitués ou non par un ou plusieurs radicaux alkyle en C1-C6, et R1 et R4 désignent hydrogène, alkyle en C1-C6, alkényle en C2-C8;
le groupement Y est tel que défini dans la revendication 1 ou 2.

4. Composition de caoutchouc selon la revendication 3, **caractérisée en ce que** le sel de thiouronium est choisi parmi les composés de formule (I) dans laquelle R1, R2, R3 et R4, identiques ou différents, désignent un atome d'hydrogène, un groupement choisi parmi les radicaux alkyle en C1-C6, alkényle en C2-C8, le groupement Y étant tel que défini dans la revendication 3.

5. Composition de caoutchouc selon la revendication 3, **caractérisé en ce que** l'analogue d'un sel de thiouronium est choisi parmi les composés de formule (I) dans laquelle, les radicaux R2 et R3 forment avec les atomes d'azote auxquels ils sont liés un hétérocycle insaturé ayant de 3 à 5 atomes de carbone non conjugué à un noyau aromatique, R1 et R4 ainsi que le groupement Y sont tels que définis dans la revendication 3.

6. Composition selon l'une quelconque des revendications 1 à 5, **caractérisée en ce qu'**elle comprend de 0.1 à 10 pce d'au moins un composé de formule (I).

7. Composition selon la revendication 6, **caractérisée en ce qu'**elle comprend de 0.5 à 5,0 pce d'au moins un composé de formule (I).

8. Composition selon la revendication 1, **caractérisée en ce que** la charge renforçante (ii) est constituée en tout ou partie d'une charge inorganique associée à un agent de couplage (iv) assurant la liaison entre ladite charge inorganique et l'élastomère (i).

9. Composition selon la revendication 1, **caractérisée en ce que** l'élastomère diénique est constitué entièrement ou partiellement par au moins un élastomère isoprénique.

10. Composition selon la revendication 9, **caractérisée en ce que** l'élastomère isoprénique est du caoutchouc naturel.

11. Procédé de préparation d'une composition de caoutchouc vulcanisable pour la fabrication de pneumatiques ou de produits semi-finis destinés à la fabrication de pneumatiques, comportant les étapes suivantes :
a) on incorpore à un élastomère, dans un mélangeur, au moins une charge renforçante;
b) on malaxe thermomécaniquement le tout, en une ou plusieurs fois, jusqu'à atteindre une température maximale comprise entre 110°C et 190°C,
c) on refroidit l'ensemble,
d) on incorpore ensuite un système de vulcanisation à base de soufre et
e) on malaxe le tout jusqu'à une température maximale inférieure à 120°C,
**caractérisé en ce qu'**on incorpore dans l'une au moins des étapes a) et d), au moins un sel de thiouronium ou analogue d'un sel de thiouronium répondant à la formule (I) telle que définie dans l'une quelconque des revendications 1 à 5.

12. Procédé selon la revendication 11, **caractérisé en ce que** le sel de thiouronium ou son analogue est incorporé dans l'étape d).

13. Procédé selon la revendication 11 ou 12, **caractérisé en ce qu'**on incorpore de 0.1 à 10 pce de sel de thiouronium ou de son analogue.

14. Procédé selon la revendication 13, **caractérisé en ce qu'**on incorpore de 0.5 à 5,0 pce de sel de thiouronium ou de son analogue.

15. Article en caoutchouc à base d'une composition de caoutchouc selon l'une quelconque des revendications 1 à 10.

16. Article semi-fini en caoutchouc pour pneumatiques à base d'une composition de caoutchouc selon l'une quelconque des revendications 1 à 10.

17. Pneumatique incorporant un article semi-fini en caoutchouc tel que défini dans la revendication 16.

18. Utilisation à titre d'agent anti-réversion dans une composition de caoutchouc vulcanisabe pour la fabrication de pneumatiques ou de produits semi-finis destinés à la fabrication de pneumatiques, d'un sel de thiouronium ou d'un analogue d'un sel de thiouronium de formule (I) suivante :
A-S-Y-S-A (I)
dans laquelle,
- A représente un groupement 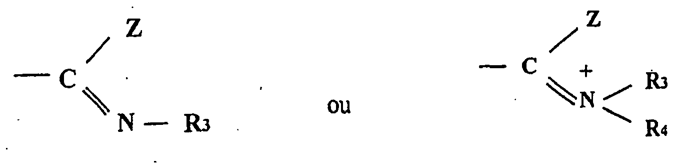 associé respectivement à une molécule HX ou un ion X⁻,
- X désignant un atome d'halogène et
- Z désignant S-R₅ ou 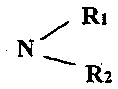 dans lesquels les radicaux R1, R2, R3, R4 et R5, identiques ou différents, désignent un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
ou alors R2 et R3 ou R5 et R3 forment avec les atomes d'azote auxquels ils sont liés un hétérocycle insaturé ayant de 3 à 5 atomes de carbone, substitués ou non par un ou plusieurs radicaux alkyle en C1-C6, ledit hétérocycle étant conjugué ou non à un noyau benzénique, et R1 et R4 désignent hydrogène, alkyle en C1-C6, alkényle en C2-C8;
- Y représente un groupe hydrocarboné divalent choisi parmi les radicaux alkylène ayant 1 à 20 atomes de carbone, cycloalkylène ayant 6 à 24 atomes de carbone, arylène ayant 6 à 18 atomes de carbone et aralkylène ayant 7 à 25 atomes de carbone, les radicaux alkylène étant linéaires ou ramifiés et pouvant être interrompus par un ou plusieurs hétéroatomes choisis parmi O et N.

19. Utilisation selon la revendication 18, **caractérisée en ce que** le sel de thiouronium ou l'analogue d'un sel de thiouronium est choisi parmi les composés de formule (I) dans laquelle Y désigne un radical alkylène linéaire, de préférence en C4-C10.

20. Utilisation selon la revendication 18 ou 19, **caractérisée en ce que** le sel de thiouronium ou l'analogue d'un sel de thiouronium est choisi parmi les composés de formule (I) dans laquelle,
Z désigne le groupement 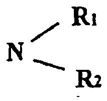 les substituants R1, R2, R3 et R4, identiques ou différents, désignent un atome d'hydrogène ou un groupe hydrocarboné monovalent, linéaire ou ramifié, choisi parmi les groupements alkyle en C1-C6, alkényle en C2-C 8, cycloalkyle en C5-C8, aryle, aralkyle le radical alkyle étant en C1-C6,
ou alors R2 et R3 forment avec les atomes d'azote auxquels ils sont liés un hétérocycle insaturé ayant de 3 à 5 atomes de carbone, substitués ou non par un ou plusieurs radicaux alkyle en C1-C6, et R1 et R4 désignent hydrogène, alkyle en C1-C6, alkényle en C2-C8;
le groupement Y est tel que défini dans la revendication 19 ou 20.

21. Utilisation selon la revendication 20, **caractérisée en ce que** le sel de thiouronium est choisi parmi les composés de formule (I) dans laquelle R1, R2, R3 et R4, identiques ou différents, désignent un atome d'hydrogène ou un groupe hydrocarboné monovalent, linéaire ou ramifié, choisi parmi les groupements alkyle en C1-C6, alkényle en C2-C8 , le groupement Y étant tel que défini dans la revendication 21.

22. Utilisation selon la revendication 21, **caractérisée en ce que** l'analogue d'un sel de thiouronium est choisi parmi les composés de formule (I) dans laquelle les radicaux R2 et R3 forment avec les atomes d'azote auxquels ils sont liés un hétérocycle insaturé ayant de 3 à 5 atomes de carbone non conjugué à un noyau benzénique, R1 et R4 ainsi que le groupement Y étant tels que définis dans la revendication 20.

23. Procédé pour réduire le taux de réversion dans une composition de caoutchouc vulcanisée, pour la fabrication de pneumatiques ou de produits semi-finis destinés à la fabrication de pneumatiques, **caractérisé en ce que** l'on incorpore par malaxage à la composition de caoutchouc à l'état cru, au moins un sel de thiouronium ou un analogue d'un sel de thiouronium tel que défini dans les revendications 18 à 22.

24. Procédé selon la revendication 23, **caractérisé en ce que** le sel de thiouronium ou l'analogue d'un sel de thiouronium est incorporé lors de la phase productive du procédé de préparation de la composition de caoutchouc vulcanisable.

## Claims

1. Rubber composition for the manufacture of tyres or of semi-finished products intended for the manufacture of tyres, based on at least (i) a diamine elastomer, (ii) a reinforcing filler and (iii) a thiouronium salt or an analogue of a thiouronium salt corresponding to formula (I) below:
A-S-Y-S-A (I)
in which:
- A represents a group 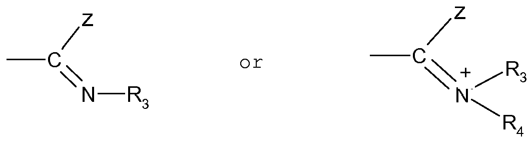 combined, respectively, with a molecule HX or an anion X⁻,
- X denoting a halogen atom and
- Z denoting S-R₅ or 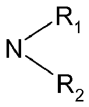 in which the radicals R₁, R₂, R₃, R₄ and R₅, which may be identical or different, denote a hydrogen atom or a linear or branched monovalent hydrocarbon-based group chosen from C₁-C₆ alkyl, C₂-C₈ alkenyl, C₅-C₈ cycloalkyl, aryl and aralkyl groups, the alkyl radical being of C₁-C₆,
or alternatively R₂ and R₃ or R₅ and R₃ form, with the nitrogen atoms to which they are attached, an unsaturated heterocycle containing from 3 to 5 carbon atoms, optionally substituted with one or more C₁-C₆ alkyl radicals, the said heterocycle being optionally conjugated to a benzene nucleus, and R₁ and R₄ denoting hydrogen, C₁-C₆ alkyl or C₂-C₈ alkenyl;
- Y represents a divalent hydrocarbon-based group chosen from alkylene radicals containing 1 to 20 carbon atoms, cycloalkylene radicals containing 6 to 24 carbon atoms, arylene radicals containing 6 to 18 carbon atoms and aralkylene radicals containing 7 to 25 carbon atoms, the alkylene radicals being linear or branched and possibly being interrupted with one or more heteroatoms chosen from O and N.

2. Composition according to the preceding claim, **characterized in that** the thiouronium salt or the analogue of a thiouronium salt is chosen from the compounds of formula (I) in which Y denotes a linear, preferably C₄-C₁₀ alkylene radical.

3. Rubber composition according to Claim 1 or 2, **characterized in that** the thiouronium salt or the analogue of a thiouronium salt is chosen from the compounds of formula (I) in which:
Z represents the group 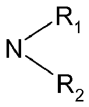 the substituents R₁, R₂, R₃ and R₄, which may be identical or different, denote a hydrogen atom or a linear or branched monovalent hydrocarbon-based group chosen from C₁-C₆ alkyl, C₂-C₈ alkenyl, C₅-C₈ cycloalkyl, aryl and aralkyl groups, the alkyl group being of C₁-C₆,
or alternatively R₂ and R₃ form, with the nitrogen atoms to which they are attached, an unsaturated heterocycle containing from 3 to 5 carbon atoms, optionally substituted with one or more C₁-C₆ alkyl radicals, and R₁ and R₄ denote hydrogen, C₁-C₆ alkyl or C₂-C₈ alkenyl;
the group Y being as defined in Claim 1 or 2.

4. Rubber composition according to Claim 3, **characterized in that** the thiouronium salt is chosen from the compounds of formula (I) in which R₁, R₂, R₃ and R₄, which may be identical or different, denote a hydrogen atom or a group chosen from C₁-C₆ alkyl and C₂-C₈ alkenyl radicals, the group Y being as defined in Claim 3.

5. Rubber composition according to Claim 3, **characterized in that** the analogue of a thiouronium salt is chosen from the compounds of formula (I) in which the radicals R₂ and R₃ form, with the nitrogen atoms to which they are attached, an unsaturated heterocycle containing from 3 to 5 carbon atoms, which is not conjugated to an aromatic nucleus, R₁ and R₄ and also the group Y being as defined in Claim 3.

6. Composition according to any one of Claims 1 to 5, **characterized in that** it comprises from 0.1 to 10 phr of at least one compound of formula (I).

7. Composition according to Claim 6, **characterized in that** it comprises from 0.5 to 5.0 phr of at least one compound of formula (I).

8. Composition according to Claim 1, **characterized in that** the reinforcing filler (ii) consists totally or partially of an inorganic filler combined with a coupling agent (iv) which provides the bond between the said inorganic filler and the elastomer (i).

9. Composition according to Claim 1, **characterized in that** the diamine elastomer consists totally or partially of at least one isoprene elastomer.

10. Composition according to Claim 9, **characterized in that** the isoprene elastomer is natural rubber.

11. Process for preparing a vulcanizable rubber composition for the manufacture of tyres or of semi-finished products intended for the manufacture of tyres, comprising the following steps:
a) at least one reinforcing filler is incorporated into an elastomer, in a mixer;
b) the whole is kneaded thermomechanically, in one or more stages, until a maximum temperature of between 110°C and 190°C is reached;
c) the whole is cooled;
d) a sulfur-based vulcanizing system is then incorporated and
e) the whole is kneaded up to a maximum temperature of less than 120°C,
**characterized in that** at least one thiouronium salt or an analogue of a thiouronium salt corresponding to formula (I) as defined in any one of Claims 1 to 5 is incorporated in at least one of the steps a) and d).

12. Process according to Claim 11, **characterized in that** the thiouronium salt or the analogue thereof is incorporated in step d).

13. Process according to Claim 11 or 12, **characterized in that** from 0.1 to 10 phr of thiouronium salt or of analogue thereof are incorporated.

14. Process according to Claim 13, **characterized in that** from 0.5 to 5.0 phr of thiouronium salt or of analogue thereof are incorporated.

15. Rubber article based on a rubber composition according to any one of Claims 1 to 10.

16. Semi-finished rubber article for tyres based on a rubber composition according to any one of Claims 1 to 10.

17. Tyre incorporating a semi-finished rubber article as defined in Claim 16.

18. Use, as an anti-reversion agent in a vulcanizable rubber composition for the manufacture of tyres or of semi-finished products intended for the manufacture of tyres, of a thiouronium salt or of an analogue of a thiouronium salt of formula (I) below:
A-S-Y-S-A (I)
in which:
- A represents a group 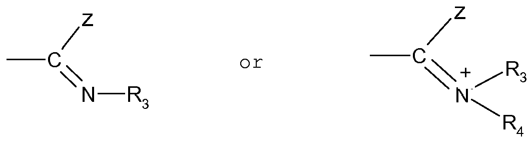 combined, respectively, with a molecule HX or an anion X⁻,
- X denoting a halogen atom and
- Z denoting S-R₅ or 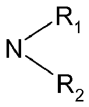 in which the radicals R₁, R₂, R₃, R₄ and R₅, which may be identical or different, denote a hydrogen atom or a linear or branched monovalent hydrocarbon-based group chosen from C₁-C₆ alkyl, C₂-C₈ alkenyl, C₅-C₈ cycloalkyl, aryl and aralkyl groups, the alkyl radical being of C₁-C₆,
or alternatively R₂ and R₃ or R₅ and R₃ form, with the nitrogen atoms to which they are attached, an unsaturated heterocycle containing from 3 to 5 carbon atoms, optionally substituted with one or more C₁-C₆ alkyl radicals, the said heterocycle being optionally conjugated to a benzene nucleus, and R₁ and R₄ denoting hydrogen, C₁-C₆ alkyl or C₂-C₈ alkenyl;
- Y represents a divalent hydrocarbon-based group chosen from alkylene radicals containing 1 to 20 carbon atoms, cycloalkylene radicals containing 6 to 24 carbon atoms, arylene radicals containing 6 to 18 carbon atoms and aralkylene radicals containing 7 to 25 carbon atoms, the alkylene radicals being linear or branched and possibly being interrupted with one or more heteroatoms chosen from O and N.

19. Use according to Claim 18, **characterized in that** the thiouronium salt or the analogue of a thiouronium salt is chosen from the compounds of formula (I) in which Y denotes a linear, preferably C₄-C₁₀ alkylene radical.

20. Use according to Claim 18 or 19, **characterized in that** the thiouronium salt or the analogue of a thiouronium salt is chosen from the compounds of formula (I) in which:
Z represents the group 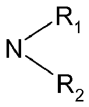 the substituents R₁, R₂, R₃ and R₄, which may be identical or different, denote a hydrogen atom or a linear or branched monovalent hydrocarbon-based group chosen from C₁-C₆ alkyl, C₂-C₈ alkenyl, C₅-C₈ cycloalkyl, aryl and aralkyl groups, the alkyl group being of C₁-C₆,
or alternatively R₂ and R₃ form, with the nitrogen atoms to which they are attached, an unsaturated heterocycle containing from 3 to 5 carbon atoms, optionally substituted with one or more C₁-C₆ alkyl radicals, and R₁ and R₄ denote hydrogen, C₁-C₆ alkyl or C₂-C₈ alkenyl;
the group Y being as defined in Claim 19 or 20.

21. Use according to Claim 20, **characterized in that** the thiouronium salt is chosen from the compounds of formula (I) in which R₁, R₂, R₃ and R₄, which may be identical or different, denote a hydrogen atom or a linear or branched monovalent hydrocarbon-based group chosen from C₁-C₆ alkyl and C₂-C₈ alkenyl groups, the group Y being as defined in Claim 20.

22. Use according to Claim 21, **characterized in that** the analogue of a thiouronium salt is chosen from the compounds of formula (I) in which the radicals R₂ and R₃ form, with the nitrogen atoms to which they are attached, an unsaturated heterocycle containing from 3 to 5 carbon atoms, which is not conjugated to an aromatic nucleus, R₁ and R₄ and also the group Y being as defined in Claim 20.

23. Process for reducing the degree of reversion in a vulcanizable rubber composition for the manufacture of tyres or of semi-finished products intended for the manufacture of tyres, **characterized in that** at least one thiouronium salt or an analogue of a thiouronium salt as defined in Claims 18 to 22 is incorporated by kneading into the raw rubber composition.

24. Process according to Claim 23, **characterized in that** the thiouronium salt or the analogue of a thiouronium salt is incorporated during the productive phase of the process for preparing the vulcanizable rubber composition.

## Patentansprüche

1. Kautschukzusammensetzung zur Herstellung von Reifen oder Halbzeugen für die Herstellung von Reifen auf Basis von mindestens (i) einem Dienelastomer, (ii) einem verstärkenden Füllstoff und (iii) einem Thiouroniumsalz oder einem Analogon eines Thiouroniumsalzes der folgenden Formel (I):
A-S-Y-S-A (I)
worin
- A für eine Gruppe 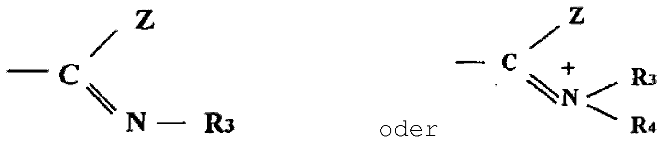 die mit einem Molekül HX bzw. einem Ion X⁻ assoziiert ist, steht,
- X für ein Halogenatom steht und
- Z für -S-R₅ oder 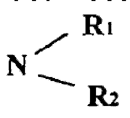 steht, worin die Reste R1, R2, R3, R4 und R5 gleich oder verschieden sind und für ein Wasserstoffatom oder eine lineare oder verzweigte einwertige Kohlenwasserstoffgruppe, die unter C1-C6-Alkylgruppen, C2-C8-Alkylengruppen, C5-C8-Cycloalkylgruppen, Arylgruppen und Aralkylgruppen, wobei der Alkylrest C1-C6 ist, ausgewählt ist, stehen
oder auch R2 und R3 oder R5 und R3 mit den Stickstoffatomen, an die sie gebunden sind, einen ungesättigten Heterocyclus mit 3 bis 5 Kohlenstoffatomen bilden, der gegebenenfalls durch einen oder mehrere C1-C6-Alkylreste substituiert ist und gegebenenfalls mit einem Benzolkern konjugiert ist, und R1 und R4 für Wasserstoff, C1-C6-Alkyl oder C2-C8-Alkenyl stehen;
- Y für eine zweiwertige Kohlenwasserstoffgruppe steht, die unter Alkylenresten mit 1 bis 20 Kohlenstoffatomen, Cycloalkylenresten mit 6 bis 24 Kohlenstoffatomen, Arylenresten mit 6 bis 18 Kohlenstoffatomen und Aralkylenresten mit 7 bis 25 Kohlenstoffatomen ausgewählt ist, wobei die Alkylenreste linear oder verzweigt sind und durch ein oder mehrere unter O und N ausgewählte Heteroatome unterbrochen sein können.

2. Zusammensetzung nach dem vorhergehenden Anspruch, **dadurch gekennzeichnet, dass** das Thiouroniumsalz oder Analogon eines Thiouroniumsalzes unter den Verbindungen der Formel (I), worin Y für einen linearen Alkylenrest, vorzugsweise einen linearen C4-C10-Alkylenrest, steht, ausgewählt ist.

3. Kautschukzusammensetzung nach Anspruch 1 oder 2, **dadurch gekennzeichnet, dass** das Thiouroniumsalz oder Analogon eines Thiouroniumsalzes unter den Verbindungen der Formel (I), worin
Z für die Gruppe 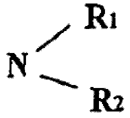 steht,
die Substituenten R1, R2, R3 und R4 gleich oder verschieden sind und für ein Wasserstoffatom oder eine lineare oder verzweigte einwertige Kohlenwasserstoffgruppe, die unter C1-C6-Alkylgruppen, C2-C8-Alkylengruppen, C5-C8-Cycloalkylgruppen, Arylgruppen und Aralkylgruppen, wobei der Alkylrest C1-C6 ist, ausgewählt ist, stehen
oder auch R2 und R3 mit den Stickstoffatomen, an die sie gebunden sind, einen ungesättigten Heterocyclus mit 3 bis 5 Kohlenstoffatomen bilden, der gegebenenfalls durch einen oder mehrere C1-C6-Alkylreste substituiert ist, und R1 und R4 für Wasserstoff, C1-C6-Alkyl oder C2-C8-Alkenyl stehen;
die Gruppe Y die in Anspruch 1 oder 2 angegebene Bedeutung besitzt,
ausgewählt ist.

4. Kautschukzusammensetzung nach Anspruch 3, **dadurch gekennzeichnet, dass** das Thiouroniumsalz unter den Verbindungen der Formel (I), worin R1, R2, R3 und R4 gleich oder verschieden sind und für ein Wasserstoffatom oder eine unter C1-C6-Alkylresten und C2-C8-Alkenylresten ausgewählte Gruppe stehen, wobei die Gruppe Y die in Anspruch 3 angegebene Bedeutung besitzt, ausgewählt ist.

5. Kautschukzusammensetzung nach Anspruch 3, **dadurch gekennzeichnet, dass** das Analogon eines Thiouroniumsalzes unter den Verbindungen der Formel (I), worin die Reste R2 und R3 mit den Stickstoffatomen, an die sie gebunden sind, einen ungesättigten Heterocyclus mit 3 bis 5 Kohlenstoffatomen bilden, der nicht mit einem aromatischen Kern konjugiert ist, wobei R1 und R4 sowie die Gruppe Y die in Anspruch 3 angegebene Bedeutung besitzen, ausgewählt ist.

6. Zusammensetzung nach einem der Ansprüche 1 bis 5, **dadurch gekennzeichnet, dass** sie 0,1 bis 10 phr mindestens einer Verbindung der Formel (I) umfasst.

7. Zusammensetzung nach Anspruch 6, **dadurch gekennzeichnet, dass** sie 0,5 bis 5,0 phr mindestens einer Verbindung der Formel (I) umfasst.

8. Zusammensetzung nach Anspruch 1, **dadurch gekennzeichnet, dass** der verstärkende Füllstoff (ii) ganz oder teilweise aus einem anorganischen Füllstoff in Assoziation mit einem Kupplungsmittel (iv), das die Bindung zwischen dem anorganischen Füllstoff und dem Elastomer (i) gewährleistet, besteht.

9. Zusammensetzung nach Anspruch 1, **dadurch gekennzeichnet, dass** das Dienelastomer ganz oder teilweise aus mindestens einem Isoprenelastomer besteht.

10. Zusammensetzung nach Anspruch 9, **dadurch gekennzeichnet, dass** es sich bei dem Isoprenelastomer um Naturkautschuk handelt.

11. Verfahren zur Herstellung einer vulkanisierbaren Kautschukzusammensetzung zur Herstellung von Reifen oder Halbzeugen für die Herstellung von Reifen, bei dem man:
a) in einem Mischer in ein Elastomer mindestens einen verstärkenden Füllstoff einarbeitet;
b) das Ganze ein- oder mehrmals thermomechanisch knetet, bis eine Höchsttemperatur zwischen 110°C und 190°C erreicht ist,
c) das Ganze abkühlt,
d) dann ein Vulkanisationssystem auf Basis von Schwefel einarbeitet und
e) das Ganze knetet, bis eine Höchsttemperatur von weniger als 120°C erreicht ist,
**dadurch gekennzeichnet, dass** man in mindestens einem der Schritte a) und d) mindestens ein Thiouroniumsalz oder ein Analogon eines Thiouroniumsalzes der Formel (I) gemäß einem der Ansprüche 1 bis 5 einarbeitet.

12. Verfahren nach Anspruch 11, **dadurch gekennzeichnet, dass** man das Thiouroniumsalz oder das Analogon davon in Schritt d) einarbeitet.

13. Verfahren nach Anspruch 11 oder 12, **dadurch gekennzeichnet, dass** man 0,1 bis 10 phr des Thiouroniumsalzes oder des Analogons davon einarbeitet.

14. Verfahren nach Anspruch 13, **dadurch gekennzeichnet, dass** man 0,5 bis 5,0 phr des Thiouroniumsalzes oder des Analogons davon einarbeitet.

15. Kautschukgegenstand auf Basis einer Kautschukzusammensetzung nach einem der Ansprüche 1 bis 10.

16. Kautschukhalbzeug für Reifen auf Basis einer Kautschukzusammensetzung nach einem der Ansprüche 1 bis 10.

17. Reifen mit einem Kautschukhalbzeug gemäß Anspruch 16.

18. Verwendung eines Thiouroniumsalzes oder eines Analogons eines Thiouroniumsalzes der folgenden Formel (I):
A-S-Y-S-A (I)
worin
- A für eine Gruppe 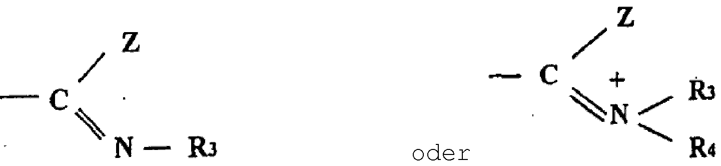 die mit einem Molekül HX bzw. einem Ion X⁻ assoziiert ist, steht,
- X für ein Halogenatom steht und
- Z für -S-R₅ oder 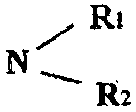 steht,
worin die Reste R1, R2, R3, R4 und R5 gleich oder verschieden sind und für ein Wasserstoffatom oder eine lineare oder verzweigte einwertige Kohlenwasserstoffgruppe, die unter C1-C6-Alkylgruppen, C2-C8-Alkylengruppen, C5-C8-Cycloalkylgruppen, Arylgruppen und Aralkylgruppen, wobei der Alkylrest C1-C6 ist, ausgewählt ist, stehen
oder auch R2 und R3 oder R5 und R3 mit den Stickstoffatomen, an die sie gebunden sind,
einen ungesättigten Heterocyclus mit 3 bis 5 Kohlenstoffatomen bilden, der gegebenenfalls durch einen oder mehrere C1-C6-Alkylreste substituiert ist und gegebenenfalls mit einem Benzolkern konjugiert ist, und R1 und R4 für Wasserstoff, C1-C6-Alkyl oder C2-C8-Alkenyl stehen;
- Y für eine zweiwertige Kohlenwasserstoffgruppe steht, die unter Alkylenresten mit 1 bis 20 Kohlenstoffatomen, Cycloalkylenresten mit 6 bis 24 Kohlenstoffatomen, Arylenresten mit 6 bis 18 Kohlenstoffatomen und Aralkylenresten mit 7 bis 25 Kohlenstoffatomen ausgewählt ist, wobei die Alkylenreste linear oder verzweigt sind und durch ein oder mehrere unter O und N ausgewählte Heteroatome unterbrochen sein können;
als Reversionsschutzmittel in einer vulkanisierbaren Kautschukzusammensetzung zur Herstellung von Reifen oder Halbzeugen für die Herstellung von Reifen.

19. Verwendung nach Anspruch 18, **dadurch gekennzeichnet, dass** das Thiouroniumsalz oder Analogon eines Thiouroniumsalzes unter den Verbindungen der Formel (I), worin Y für einen linearen Alkylenrest, vorzugsweise einen linearen C4-C10-Alkylenrest, steht, ausgewählt ist.

20. Verwendung nach Anspruch 18 oder 19, **dadurch gekennzeichnet, dass** das Thiouroniumsalz oder Analogon eines Thiouroniumsalzes unter den Verbindungen der Formel (I), worin
Z für die Gruppe 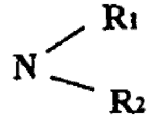 steht,
die Substituenten R1, R2, R3 und R4 gleich oder verschieden sind und für ein Wasserstoffatom oder eine lineare oder verzweigte einwertige Kohlenwasserstoffgruppe, die unter C1-C6-Alkylgruppen, C2-C8-Alkylengruppen, C5-C8-Cycloalkylgruppen, Arylgruppen und Aralkylgruppen, wobei der Alkylrest C1-C6 ist, ausgewählt ist, stehen
oder auch R2 und R3 mit den Stickstoffatomen, an die sie gebunden sind, einen ungesättigten Heterocyclus mit 3 bis 5 Kohlenstoffatomen bilden, der gegebenenfalls durch einen oder mehrere C1-C6-Alkylreste substituiert ist, und R1 und R4 für Wasserstoff, C1-C6-Alkyl oder C2-C8-Alkenyl stehen;
die Gruppe Y die in Anspruch 19 oder 20 angegebene Bedeutung besitzt,
ausgewählt ist.

21. Verwendung nach Anspruch 20, **dadurch gekennzeichnet, dass** das Thiouroniumsalz unter den Verbindungen der Formel (I), worin R1, R2, R3 und R4 gleich oder verschieden sind und für ein Wasserstoffatom oder eine lineare oder verzweigte einwertige Kohlenwasserstoffgruppe, die unter C1-C6-Alkylgruppen und C2-C8-Alkenylgruppen ausgewählt ist, stehen, wobei die Gruppe Y die in Anspruch 20 angegebene Bedeutung besitzt, ausgewählt ist.

22. Verwendung nach Anspruch 20, **dadurch gekennzeichnet, dass** das Analogon eines Thiouroniumsalzes unter den Verbindungen der Formel (I), worin die Reste R2 und R3 mit den Stickstoffatomen, an die sie gebunden sind, einen ungesättigten Heterocyclus mit 3 bis 5 Kohlenstoffatomen bilden, der nicht mit einem Benzolkern konjugiert ist, wobei R1 und R4 sowie die Gruppe Y die in Anspruch 20 angegebene Bedeutung besitzen, ausgewählt ist.

23. Verfahren zur Verringerung der Reversionsrate in einer vulkanisierten Kautschukzusammensetzung zur Herstellung von Reifen oder Halbzeugen für die Herstellung von Reifen, **dadurch gekennzeichnet, dass** man in die Kautschukzusammensetzung im Rohzustand durch Kneten mindestens ein Thiouroniumsalz oder ein Analogon eines Thiouroniumsalzes gemäß einem der Ansprüche 18 bis 22 einarbeitet.

24. Verfahren nach Anspruch 23, **dadurch gekennzeichnet, dass** man das Thiouroniumsalz oder das Analogon eines Thiouroniumsalzes während der produktiven Phase des Verfahrens zur Herstellung der vulkanisierbaren Kautschukzusammensetzung einarbeitet.
